Europäisches Patentamt

European Patent Office

Office européen des brevets

(11) Publication number: **0 444 792 A2**

## (12) EUROPEAN PATENT APPLICATION

(21) Application number: **91301083.1**

(51) Int. Cl.⁵: **H02M 1/10**

(22) Date of filing: **11.02.91**

(30) Priority: **28.02.90 KR 221390**

(43) Date of publication of application:
**04.09.91 Bulletin 91/36**

(84) Designated Contracting States:
**ES FR IT LU**

(71) Applicant: **GOLD STAR CO. LTD**
**20 Yoido-Dong, Youngdungpo-ku**
**Seoul(KR)**

(72) Inventor: **Lee, Min Ki**
**Eunah Apt., 4-103, Gaumjung-dong**
**Changwon-si, Kyungsangnam-do(KR)**

(74) Representative: **Carmichael, David Andrew**
**Halliday et al**
**G.F. REDFERN & CO. High Holborn House**
**52/54 High Holborn**
**London WC1V 6RL(GB)**

(54) **Automat supply voltage switching circuit.**

(57) The present invention provides an automatic supply voltage switching circuit which consists of a rectifying circuit(2) which rectifies the inputted working AC voltage; a voltage regulating circuit(3) which smooths the rectified voltage and outputs a prescribed voltage according to the level of the inputted AC voltage; an input voltage detecting circuit(4) which compares the signal transmitted by said voltage regulating circuit with the set reference voltage; a delay circuit(6) which delays output of the signal from said input voltage detecting circuit for the prescribed period of time; a reset circuit(5) which discharges immediately the charge which was charged for delay when the power is off; a switching signal generating circuit(7) which outputs switching signal in accordance with the signal transmitted by said delay circuit after the lapse of a given time; a similar load circuit(8) which prevents the current fluctuation which is generated during the operation of said switching signal generating circuit(7); and a voltage switching circuit(9) which comprises a power source transformer for supplying constant voltage to the load side connected to the secondary side and a switching means for selecting the primary side tap of the power source transformer, and applies the AC voltage inputted in accordance with the said switching signal generating circuit to the corresponding tap of the transformer via the switching means.

The automatic supply voltage switching circuit according to the invention makes it possible to feed always constant voltage into the load side regardless of the level of the supplied AC working voltage, to stabilize the circuit against the temporary fluctuation of the supplied AC working voltage and to maintain the current of the load side constantly all the time.

F I G . 1

## Field of the Invention

The present invention relates to an automatic supply voltage switching circuit. More particularly, it relates to a circuit for automatically switching the supply voltage, which can supply constant voltage to the circuits inside the electric product, which is available for use on two working alternating current (AC) voltages, all the time regardless of the size of the supply voltage by detecting the size of the supplied AC voltage so that the primary relay of power source transformer can be automatically switched on or off.

## Prior Art

The conventional supply voltage switching device has a drawback that the user should set the switch-($SW_1$), which is placed between the other terminals and primary intermediate terminal of the the power source transformer ($T_1$) and is exposed to the outside of the product case, in accordance with the size of supply voltage (e.g., 110V or 220V) in order to apply constant voltage to the circuit parts inside the product.

The conventional device, further, has a problem that, when the switch($SW_1$) is set to lower working AC voltage(e.g., 110V), the operation on higher working AC voltage(e.g., 220V) shall cause damage of product.

## Summary of the Invention

Thus, the object of the invention is to provide an automatic supply voltage switching circuit which can protect the interior circuits from the damage due to overvoltage by detecting the size of the applied AC voltage and switching automatically the contact switch of a relay, which is installed in the primary side of the power source transformer, in accordance with the detected size of the voltage, even without the outside manual operation of the switch.

The object of the invention is accomplished by the circuit automatically switching the supply voltage which consists of a rectifying circuit for rectifying the inputted working AC voltage; a voltage regulating circuit for smoothing the rectified voltage and for sending a prescribed voltage in accordance with the size of the inputted AC voltage; an input voltage detecting circuit for comparing the signal transmitted from said voltage regulating circuit with the set reference voltage; a delay circuit for delaying output of the signal transmitted by said input voltage detecting circuit for the prescribed period of time; a reset circuit for discharging immediately the charge which was charged for delay when the power is off; a switching signal generating circuit for sending a switching signal in accordance with the signal transmitted by said delay circuit after the lapse of a given time; a similar load circuit for preventing the current fluctuation which is generated during the operation of said switching signal generating circuit; and a voltage switching circuit which comprises a power source transformer for supplying constant voltage to the load side connected to the secondary side and a switching means for selecting the primary side tap of the power source transformer and applies the AC voltage to the corresponding tap of the transformer via the switching means, said AC voltage being inputted in accordance with the output signal of the signal generating circuit.

## The Brief Description of Drawings

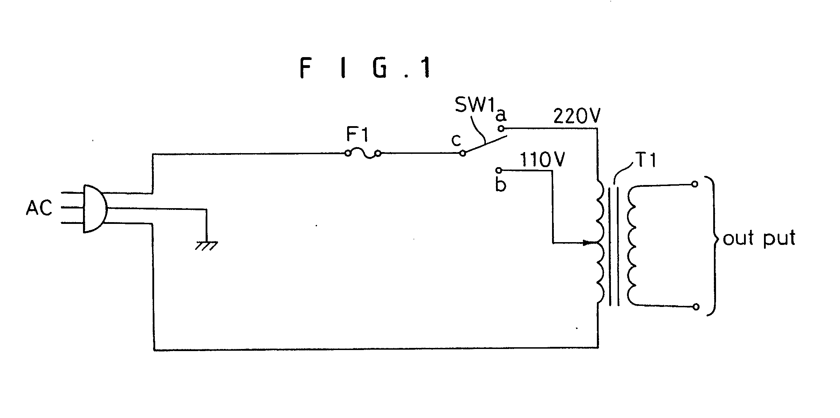

Fig. 1    is a diagram of the conventional voltage switching circuit.
Fig. 2    is a block diagram of the according to the invention.
Fig. 3    is a detailed diagram of the circuit according to the invention.

## The Detailed Description of the Invention

The present invention will be described in detail with reference to the companying drawings.
The objects, features and advantages of the invention will be apparent from the following description.

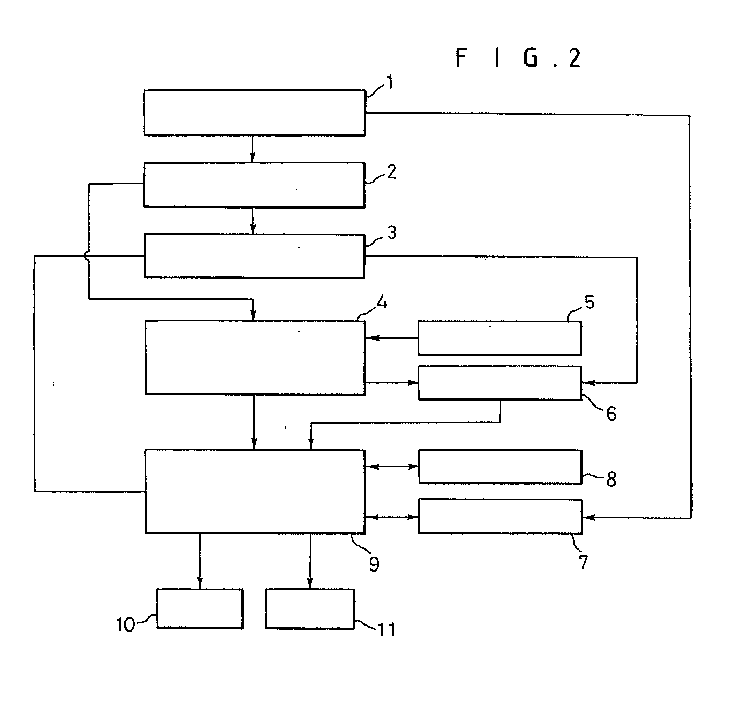

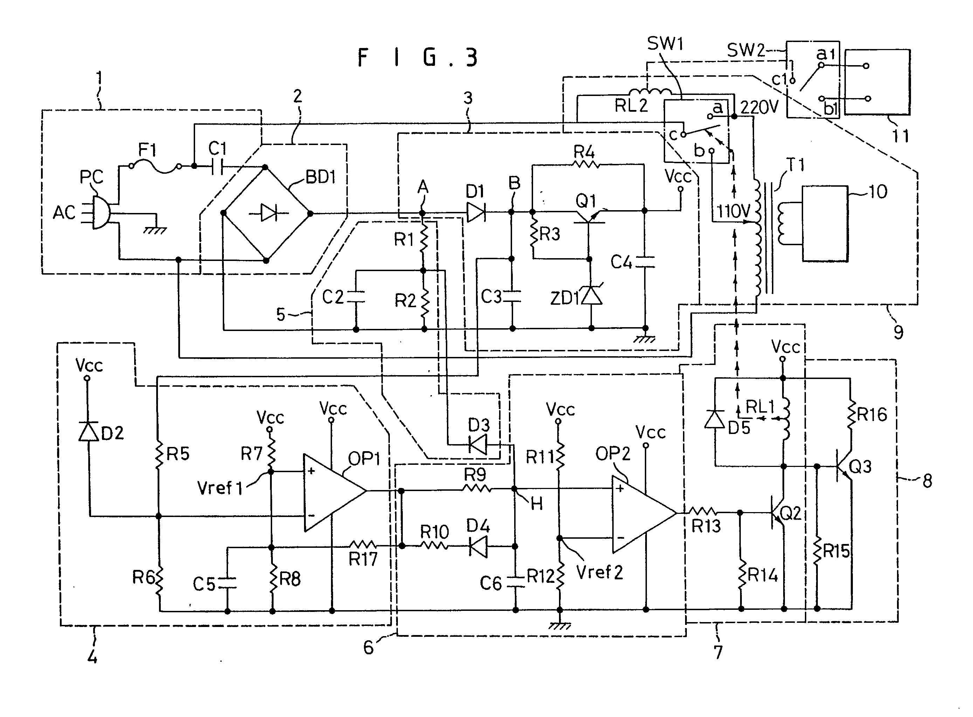

The AC input circuit(1) shown in Fig 2 is composed of a power code(PC), a fuse(F) and a capacitor($C_1$) as indicated in Fig. 3.

The rectifying circuit(2) consists of a bridge diode($BD_1$).

The voltage regulating circuit(3) consists of resistors($R_3$ $R_4$)for distributing current, capacitors($C_3$, $C_4$) for smoothing the voltage, a diode($D_1$), a Zener diode($ZD_1$) and an adjustment transistor($Q_1$).

The input voltage detecting circuit(4), which determines whether or not the supply voltage shall be off by comparing the output of the rectifying circuit with that of voltage regulating circuit, consists of resistors-($R_5$, $R_6$), resistors($R_7$, $R_8$) for reference voltage, a resistors($R_{17}$) for hysteresis, a diode($D_2$), a capacitor($C_5$) and an operational amplifier($OP_1$) for effecting comparison.

2

The reset circuit(5), which maintains the circuit stable state when the power code(PC) of the AC input circuit(1) is pulled out from a wall outlet or the electric power is cut off instantaneously, consists of resistors-($R_1$, $R_2$), a capacitor($C_2$) and a diode($D_3$).

The delay circuit(6), which improves the reliability of the product by delaying the operating response of relay when a transient voltage is applied due to an instantaneous change of power source or an instantaneous failure of electric power, consists of resistors($R_9$, $R_{10}$), resistors ($R_{11}$, $R_{12}$) for reference voltage, a diode($D_4$), a capacitor($C_6$) and an operational amplifier($OP_2$) for effecting comparison.

The switching signal generating circuit(7), which controls the power's on or off of the relay after the lapse of a given time in accordance with the output of said delay circuit(6), consists of resistors($R_{13}$, $R_{14}$), a diode ($D_5$), a transistor($Q_2$) and a first relay($RL_1$).

The similar load circuit(8) consists of a transistor($Q_3$) and resistors ($R_{15}$, $R_{16}$).

The voltage switching circuit(9) consists of a first relay switch($SW_1$) of which the common terminal(C) is operated to be connected to 110V selection terminal(b) or to 220V selection terminal(c) in accordance with the motion of said switching signal generating circuit(7), a second relay($RL_2$) which controls another load(11) in accordance with the motion of said switching signal generating circuit(7) and an adjustment transformer-($T_1$) which feeds a corresponding supply voltage to the load(10) or (11) in accordence with the terminal selection by the first relay switch($SW_2$).

The operation principle of the circuit according to the invention will be described with reference to the drawings.

The capacitor($C_1$) of the AC input circuit(1) has a function of dropping voltage and may be chosen depending on the minimum input voltage. For example, when the load current is 50mA while the working frequency 60HZ and the input voltage regulation is -15%, the impedance of the capacitor is 1390 according to the following formula(1):

$$Z = \frac{(110 \times 0.85) - VZ(=24V)}{50 \text{ mA}} = 1390 \cdots\cdots(1)$$

Further, since the impedance also can be determined by the following formula(2), the capacity of the capacitor(C1) may be calculated therefrom.

$$Z = Xc = \frac{1}{2\pi fc} \cdots\cdots (2)$$

Thus obtained capacity is 1.9[$\mu$ F].

Accordingly, the capacitor having a capacity of 1.9 $\mu$F/250V may substitute for the conventional step down type power source transformer and can step down the input voltage without loss since the phase difference between current and voltage is 90°.

The AC voltage which was step downed by the capacitor($C_1$) is rectified through the bridge diode ($BD_1$) of the rectifying circuit(2), smoothed by the capacitor($C_3$) of the voltage regulating circuit(3), and transformed to constant voltage of 24V by the transistor($Q_1$) and by the Zener diode($ZD_1$) having Zener voltage which was set to 24V. Consequently, the point B has voltage of 24V.

On the other hand, when the supply power is cut off, the voltage of the point B reduces gradually due to the large capacity of the smoothing capacitor($C_3$) while the voltage of the point A reduces rapidly due to the small capacity of the capacitor($C_2$) of the reset circuit(5), causing turn-on of the diode($D_3$).

Moreover, the charge which was charged for the delay function of the delay circuit(6) of the capacitor($C_6$) is discharged rapidly as soon as the power is off, so that the operational amplifier($OP_1$) of the input voltage detecting circuit(4), which effects comparison, is reset.

Thus, when the electric power is off instantaneously or the power code (PC) is pulled out from a wall outlet abruptly the charge which was charged in the capacitor(2) of the reset circuit(5) is discharged rapidly. At the same time, the charge which was charged in the capacitor($C_6$) of the delay circuit(6) is also discharged and, then, the input voltage of the non-inversion terminal(+) of the operational amplifier($OP_2$) becomes lowered, making the state of the output of the operational amplifier($OP_2$) "low".

Consequently, the current flow through the first relay($RL_1$) of the switching signal generating circuit(7) is interrupted so that the terminal connection state of the contact switch($SW_1$) of the voltage switching circuit

3

EP 0 444 792 A2

(9) returns to a initial state of c-a.

Sine the reference voltage(Vref$_1$), which is applied to the non-inversion terminal(+) of the operational amplifier(OP$_1$) of the output voltage detecting circuit(4), is set higher than the distributional voltage, which is applied to the inversion terminal(-), when the supply voltage is 110V, while it is set lower than the distributional voltage when the supply voltage is 220V,the output of the operational amplifier(OP$_1$) is in "high" state when the voltage of 110V is supplied while is in "low" state when the voltage of 220V is supplied.

Furthermore, since the reference voltage is set to an intermediate value of 110V and 220V, i.e. 160V, the output of the operational amplifier (OP$_1$) is in "high" state when the voltage is lower than 160V while is in "low" state when the voltage is higher than 160V.

The repeat operation of "on, off" by the first relay(RL$_1$) within the inversion range having certain width around 160V can be prevented,since, when the output of the operational amplifier(OP$_1$) becomes "high" state due to the 110V supply voltage, the voltage of the non-inversion input terminal(+) of the operational amplifier(OP$_1$) of the input voltage detecting circuit(4), i.e., the reference voltage(Vref$_1$) increases slightly by positive feedback resistor(R$_{17}$) and the voltage applied to the non-inversion input terminal (+) gets hysteresis character.

For example, thus obtained hysteresis width of 5V renders the output of the operational amplifier(OP$_1$) remains "high" state even when the voltage increases slighitly up to 165V and, then is inverted to "low" state when the voltage becomes higher than 165V.

When the output of the operational amplifier(OP$_1$) becomes "high", the capacitor(C$_6$) is charged with charge through the resistor(R$_9$) of the delay circuit(6) and the voltage of the point H increases as a form of exponential function. At this time, where the voltage is higher than the reference voltage(Vref$_2$) which is applied to the inversion input terminal(-) of the operational amplifier(OP$_2$) which effects comparison, the output of the amplifier(OP$_2$) becomes "high" and the transistor of the switching signal generating circuit(7) is switched on. Then, the common terminal(c) of the contact switch(SW$_1$) of the first relay(RL$_1$) is automatically connected to the fixed terminal(b), so that the 110V AC voltage, which was fed to the AC input circuit(1), is applied to the intermediate tap of the power source transformer of the voltage switching circuit-(9). Further, since the transistor (Q$_3$) of the similar load circuit(8) is switched off in turn, the resistor (R$_{16}$) becomes the same as that of the first relay(RL$_1$), reducing the variation of the load current.

When the power is applied to the first time, the output of the operational amplifier(OP$_1$) becomes "low" state regardless of the size of the input voltage, since the capacitor(C$_5$) of the input voltage detecting circuit(4) is not charged with charge.

On the other hand, as soon as the power is off, the output of the operational amplifier(OP$_2$) becomes "low" since the point H maintains its reset state. And, the transistor(Q$_2$) of the switching signal generating circuit (7) and then the first relay(RL$_1$) are switched off, so that the common terminal(C) of the contact switch(SW$_1$) of the first relay(RL$_1$) is connected to the fixed terminal(a) and, at the same time, the transistor-(Q$_3$) of the similar load circuit(8) is switched on.

Thus, the transistor(Q$_2$) of the switching signal generating circuit(7) and the transistor(Q$_2$) of the similar load circuit(8) operate in opposition to each other to keep the current of the load(10) constant. Consequently, the electric potential of the point B of the voltage regulating circuit(3) also remains constant.

In other words, in the begining of the power supply, the power source transformer(T$_1$) is set to 220V since the common terminal(c) of the contact switch(SW$_1$) of the first relay(RL$_1$) is connected to the fixed terminal (a) and the transformer(T$_1$) maintains the 220V state regardless of the size of supply voltage, 110V or 220V. When the voltage lower than 160V is applied for about 1 sec or more, the voltage is fed to the capacitor(C$_6$) of the delay circuit (6) and the voltage of the point H increases to higher than the reference voltage(Vref$_2$) while the output of the operational amplifier(OP$_2$) becomes "high" state.

Therfore, the common terminal(c) of the contact switch(SW$_1$) of the first relay(RL$_1$) is connected immediately to the fixed terminal (b) of 110V side and a certain voltage corresponding to 110V is applied to the load(10) which is connected to the secondary side of the power source transformer(T$_1$) of the voltage switching circuit(9). Accordingly, the circuit of the load(10) side may be protected from the damage caused by overvoltage.

In the voltage switching circuit(9), the secondary relay(RL$_2$) is connected between the common terminal(c) of the contact switch(SW$_1$) of the first relay(RL$_1$) and the fixed terminal(a) of the 220V side and is operated in associated with said first relay(RL$_1$) to control the other load(11) through the contact switch-(SW$_2$).

Although the embodiment shown in Fig. 3 discloses the case in which the working voltage is 110V/220V, the present invention can be applied to the cases in which the working voltage is 110V/220V, 127V/220V, 120V/220V or 122V/220V.

4

As described above, the circuit according to the invention can protect the product from the damage caused by overvoltage by switching automatically the contact switch of the relay connected to the primary side of the power source transformer in accordance with the size of supply voltage so that the load can be fed with a constant voltage regardless of the size of the supply voltage.

**Claims**

1. An automatic supply voltage switching circuit which comprises
   a rectifying circuit(2)which rectifies the inputted working AC voltage;
   a voltage regulating circuit(3) which smooths the rectified voltage and sends a prescribed voltage according to the level of the inputted AC voltage;
   an input voltage detecting circuit(4) which compares the signal transmitted by said voltage regulating circuit(3) with the set reference voltage;
   a switching signal generating circuit(7) which outputs switching signal in accordance with the signal transmitted by said input voltage detecting circuit(4); and
   a voltage switching circuit(9) which comprises a power transformer($T_1$) for supplying constant voltage to the load side connected to the secondary side and a switching means for selecting the primary side tap of said transformer($T_1$), and applies the AC voltage in accordance with the signal transmitted by said switching signal generating circuit (7) to the primary side tap of said transformer($T_1$) via the switching means.

2. The automatic supply voltage switching circuit according to claim 1, which comprises a delay circuit(6) between said input voltage detecting dircuit(4) and said switching signal generating circuit(7) so that, by delaying the output of the signal sent from said input voltage detecting circuit(4) for a given time, the circuit can be operated stably even when a temporary fluctuation of the input AC voltage arises.

3. The automatic supply voltage switching circuit according to claim 2, in which said delay circuit(6) consists of a mean for charging charge when the output signal of the input voltage detecting circuit(4) is inputted; a reference voltage generating circuit for generating the set reference voltage; and a comparator for comparing the output signal of said mean with that of said reference voltage generating circuit.

4. The automatic supply voltage switching circuit according to claim 2 or 3, which comprises a reset circuit(5) between said rectifying circuit(2) and said delay circuit(6) so that the circuit can be initialized by discharging immediately the charge, which was charged for delay, at the time of power-off.

5. The automatic supply voltage switching circuit according to claim 1, which comprises a similar load circuit(8) between said switching signal generating circuit(7) and said voltage switching circuit(9) so that the load fluctuation can be reduced by being operated in opposition to said switching signal generating circuit(7) to take share in load when the switching mean of said voltage switching circuit(9) is controlled by output signal of switching signal generating circuit(7).

6. The automatic supply voltage switching circuit according to claim 1, in which said input voltage detecting circuit(4) consists of a reference voltage generating circuit for generating a set reference voltage and a comparator for comparing the reference voltage with output voltage of voltage regulating circuit(3).

7. The automatic supply voltage switching circuit according to claim 6, in which the set reference voltage of said input voltage detecting circuit(4) is the average of two working AC voltages.

8. The automatic supply voltage switching circuit according to claim 6 or 7, which comprises positive feedback resistor between the output side of the comparator and reference voltage input terminal so that the reference voltage can have a certain hystersis width.

9. The automatic supply voltage switching circuit according to claim 1, in which said switching signal generating circuit comprises a relay and the contact switch of said relay serves as a switching means of said voltage switching circuit.

5

10. The automatic supply voltage switching circuit according to claim 9, which comprises another relay between the common terminal and one fixed terminal of said relay contact switch so that another load can be controlled in asociation with the motion of said relay contact switch.

# F I G . 1

EP 0 444 792 A2

EP 0 444 792 A2

F I G . 3

EP 0 444 792 A2